# EUROPEAN PATENT APPLICATION

(11) **EP 2 884 821 A2**
(43) Date of publication of application: **17.06.2015**
(21) Application number: 14188199.5
(22) Date of filing: 08.10.2014
(51) Int. Cl.: H05B 33/08

(54) **Control circuit for light sources in vehicles**

(30) Priority: 10.12.2013 PT 2013107347
(71) Applicant: Transport-Teknik A/S, 6000 Kolding (DK)
(72) Inventor: Pedersen, Leif, 2670 Greve Denmark (DK); Lopes Loureiro, Manuel Fernando, 3800-230 Aveiro (PT); Pereira de Almeida Gomes, Nuno Miguel, 3800-230 Aveiro (PT); de Vilhena Carneiro de Carvalho, Camilo Augusto, 3800-230 Aveiro (PT)
(74) Representative: Ferreira, Maria Silvina

(57) **Abstract**

The present application discloses a circuit and method for operating a light source of a vehicle, in particular a signalling light source, and/or an automobile, truck or truck trailer light, and/or a LED light or filament lamp light.

The device and method here described is intended to be mounted in between the ECU or flasher unit and the lamps. One of its main functions is to mask or convert electrical characteristics of LED lamps so that upstream they can be seen as filament lamps by the ECU. This device may only be applied to lamps of critical functions, e.g. STOP and flashers, because these are the ones that usually have failure detection and warning mechanisms.

## Description

### Technical field

The present disclosure relates to a circuit and method for operating a light source of a vehicle, in particular a signalling light source, and/or an automobile, truck or truck trailer light, and/or a LED light or filament lamp light.

### Summary

It is disclosed a control circuit device for a light source of a vehicle, wherein the light source comprises a lamp, and said lamp being either a LED lamp or filament lamp, comprising:
a current sense detector of the current drawn by the lamp;
an incandescent filament simulation load, comprising a steady-state simulation load and a pulse-peak simulation load.
a switch, connected with the simulation load, for connecting the simulation load in parallel with the lamp;
a first comparator, connected to the current sense detector, of a minimum current of the current drawn by the lamp with a first predetermined threshold value of the minimum current;
a second comparator, connected to the current sense detector, of a peak current increase rate of the current drawn by the lamp with a second predetermined threshold value of the peak current increase rate;
a control module configured to close the switch to connect the simulation load in parallel with the lamp, when the first comparator determines that the current drawn by the lamp is above the first predetermined threshold value and the second comparator determines that the increase rate of the current drawn by the lamp is below the second predetermined threshold value.

In an embodiment, the control circuit device is configured to maintain the switch closed, when the switch has been closed, until when power is removed from the control circuit device.

In an embodiment, the control circuit device comprises a thyristor configured to maintain the switch closed, when the switch has been closed, until when power is removed from the control circuit device.

In an embodiment, the control circuit device is configured to maintain the switch closed, when the switch has been closed, until when the first comparator determines that the current drawn by the lamp is below the first predetermined threshold value.

In an embodiment, the second comparator of the peak current increase rate threshold comprises a differentiator of the current drawn by the lamp for obtaining the increase rate of the peak current drawn by the lamp.

In an embodiment, the differentiator is a high-pass RC filter.

In an embodiment, the second comparator of the peak current increase rate threshold comprises a low pass filter of the differentiated current drawn by the lamp.

In an embodiment, the low pass filter is a RC filter.

In an embodiment, the simulation load comprises a resistive load.

In an embodiment, the steady-state simulation load and/or the pulse-peak simulation load is a resistive load.

In an embodiment, the pulse-peak simulation load is configured to be enabled for an equivalent time of the peak current time of a filament lamp, in particular such that an Electronic Control Units, ECU,

In an embodiment, the switch comprises a power MOSFET.

In an embodiment, the pulse-peak simulation load comprises an RC-circuit timer for setting the duration of the pulse-peak simulation.

It is also disclosed a method of controlling a light source of a vehicle, wherein the light source comprises a lamp, and said lamp being either a LED lamp or filament lamp, comprising:
detecting the current drawn by the lamp;
switching an incandescent filament simulation load in parallel with the lamp, when:
   the current drawn by the lamp is above a first predetermined minimum current threshold; and
   when the increase rate of the current drawn by the lamp is below a second predetermined peak current increase rate threshold.

It is also disclosed a method of controlling two light sources of a vehicle, wherein each light source comprises a lamp, and each said lamp being either a LED lamp or filament lamp, comprising:
detecting the current drawn by each lamp;
switching an incandescent filament simulation load in parallel with the lamp, when:
   the current drawn by both lamps is above a first predetermined minimum current threshold; and
   when the increase rate of the current drawn by both lamps is below a second predetermined peak current increase rate threshold.

### Background Art

In the past, lighting for automotive applications has extensively used filament lamps (light bulbs). Critical functions like Stop lights and flashers (e.g. turn indicators) have thus used 21W bulbs. Vehicles have also been provided with Electronic Control Units, ECU's, able to detect failure of such filament lamps. ECU's were thus built to expect filament lamps mounted on the vehicle. For critical lighting functions, the ECU's normally have mechanisms to detect and give warning of lamp failure to the driver.

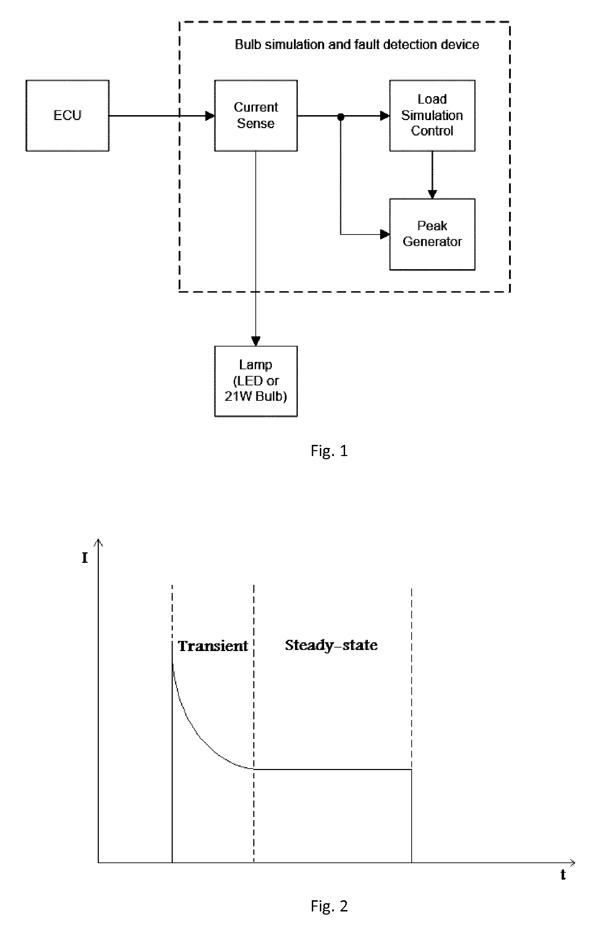

A metal must be heated to extreme temperatures before it will emit a useful amount of visible light. Therefore light bulbs are normally manufactured with alloys of tungsten filaments because tungsten has a very high melting temperature, allowing it to emit visible light before melting. Materials, such as alloys of tungsten, do however have a temperature-dependent resistance which increases with rising temperature. This means that the incandescent filament normally has a relatively low resistance when the lamp is switched on, since when no current is flowing through, it has a lower temperature than when in a steady warmed-up state. Given a certain supply voltage, this initially low resistance results in a relatively high current which typically expresses itself in the form of a current peak when the lamp is switched on. This current peak can be several times higher than the current which corresponds to the rated power of the lamp (current during steady working state). Filament lamps have a unique current consumption profile (Fig. 2). Such profile starts with a high current pulse transient and, when the filament is warmed-up, the resistance increases and becomes stable, generating a steady-state phase in the profile of a lower but substantially constant current.

Currently, filament lamps are being replaced by LED lamps, despite the significantly higher price of LED's. LED lamps are superior and have clear advantages over filaments lamps, namely:
- Superior life time (up to 100.000 hours, in comparison to the approx. 500 hours of filament lamps)
- Efficiency (more light emitted for the equivalent power consumption)
- No warm-up state needed, meaning faster response times

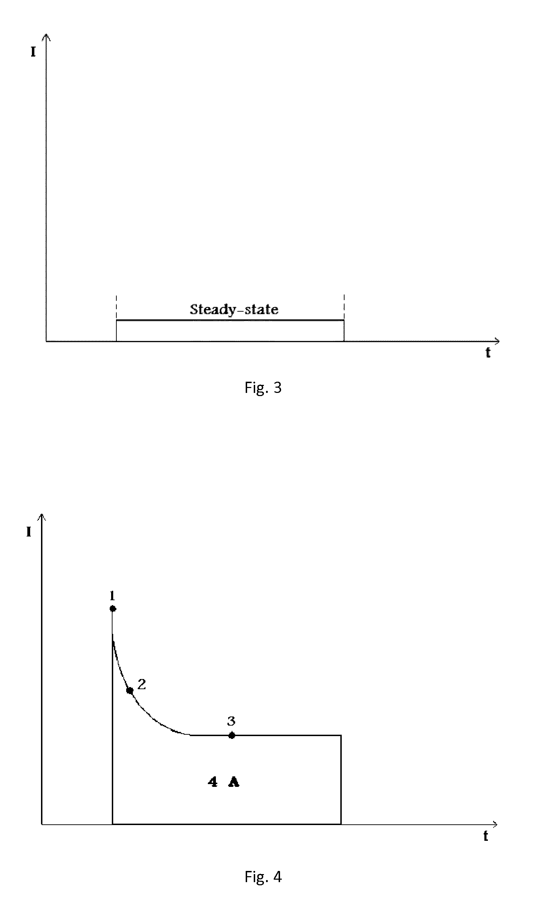

LED lamps have no warm-up phase, its current consumption profile is like a simple square waveform (Fig. 3) that only has a steady-state phase. A LED has a lower steady-state current value than the steady-state of a filament lamp of equivalent light emitting characteristics.

Although LED lamps are clearly better than filament lamps, its replacement in older vehicles without pre-mounted LED lamps is not a direct replacement action. Replacing a bulb directly for a LED lamp will result in a continuous failure warning indication by the vehicle ECU, e.g. shown in the dashboard of the vehicle, as it is a requirement of ECE regulation 48. This fault indication is due to the scan made by the ECU, that does not recognize the LED lamp as a functional working lamp and expects a filament lamp. Older ECU's can have one or more of several types of scans to determine if a valid lamp is mounted on (see Fig. 4):
1. Measuring the initial current pulse peak
2. Measuring the current at some point of the initial pulse peak
3. Measuring the steady-state current consumption
4. Determining the total energy consumed by the lamp (area A in Fig. 4)

A transition between filament lamps and LED lamps demands thus some kind of adaptation in between ECU and lamp device. The main function of such device would be to mask the LED lamp downstream so it looks like a filament lamp upstream.

Document FR2900534B1 describes a resistive load coupled to a LED lamp in order that the ECU does not signal malfunction of a filament lamp. It also describes electronic detection, but only for the detection of the LED lamp failure for removing the resistive load in such failure cases. It is not able to work with both LED and filament lamps.

### Disclosure of the Invention

The device and method here described is intended to be mounted in between the ECU or flasher unit and the lamps. One of its main functions is to mask or convert electrical characteristics of LED lamps so that upstream they can be seen as filament lamps by the ECU. This device may only be applied to lamps of critical functions, e.g. STOP and flashers, because these are the ones that usually have failure detection and warning mechanisms.

Due to its implementation, this device it can work both with filament lamps and LED lamps. When a filament lamp is attached to the device the device won't do anything and it will be "invisible" upstream. If a LED lamp is attached to the device it will simulate a current pulse peak when the lamp is switched on and a continuously load similar to the filament lamps during the steady-state phase.

In order to mask LED lamps, firstly the device has to be able to detect if some lamp is attached to the system. Then it has to distinguish between filament lamp and LED lamp. To accomplish these tasks, the device takes advantage of the unique current profile of the filament lamps.

An overview of the functional diagram of an embodiment of the device can be seen in the figure 1, but the following also applies to the overall disclosure.

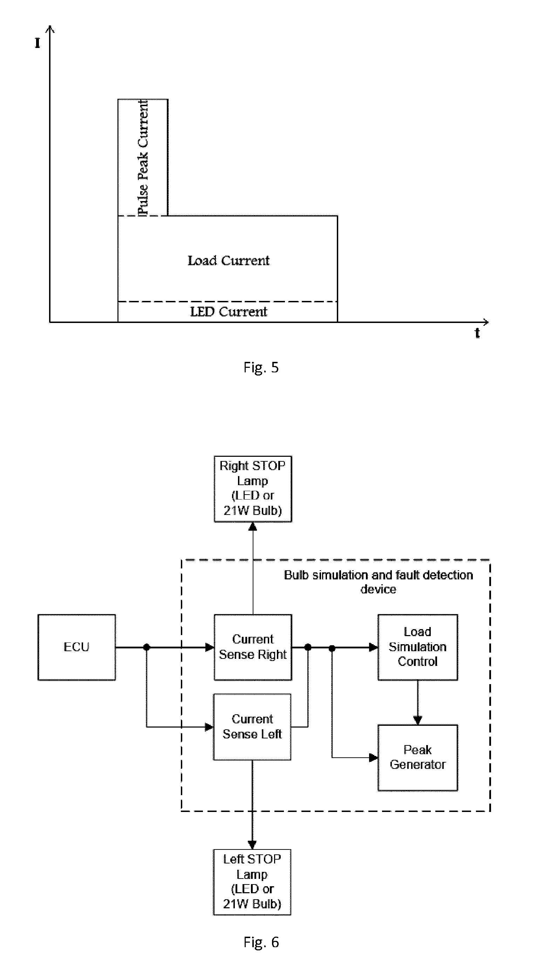

The operation of the device is based on the measure of the current drawn by the lamps. The device verifies if that current exceeds a threshold value (hereinafter designated Iₘᵢₙ) to determine if a working lamp is attached to the system. If the current is below Iₘᵢₙ, neither the load will be simulated nor the pulse peak will be generated. If the current is above lₘᵢₙ, the device determines if a filament or LED lamp is attached by means of the transient phase after the lamp is switched on. In case of filament lamp detection, neither the load will be simulated nor the pulse peak will be generated. Otherwise if a LED lamp is detected a current pulse peak will be generated and a load will be switched on, both in parallel with the led lamp. The resulting current profile seen by the ECU is shown in figure 5.

By detecting the transient phase, i.e. the initial current peak of the lamp, this enables telling apart LED and filament lamps, even if these have similar current levels.

The transient phase is preferably detected by the current increase rate, i.e. the current derivative; enabling the detection of the peak to occur much faster than simply detecting the current level and deciding sooner whether the filament lamp simulation load should be activated.

With this additional current being drawn, the ECU will consider that a filament lamp is attached and no warning mechanism will be activated.

An embodiment of device also for Stop lights comprises the modules described by the block diagram of figure 6. One embodiment of the device is foreseen for each flasher (left and right) and one embodiment is foreseen for the Stop. The one for the Stop is however more complex than for other lights, because it has to monitor and simulate two lamps (left Stop and right Stop). Each of the lights may be operating normally, either being a filament lamp or a LED, or each may be not operating normally - i.e. blown out in open circuit. If either of the Current Sense modules detects the need to disable the load and peak simulation, then the load and peak simulation will be disabled. One of the advantages is that the filament lamp simulation load can be shared between both lamps. Another advantage is that if one of the lights is a filament lamp and the other is a LED, then the load and peak simulation may be disabled as it will be unnecessary.

It will be presented in detail each circuit of the functional block diagram of said embodiment of the device.

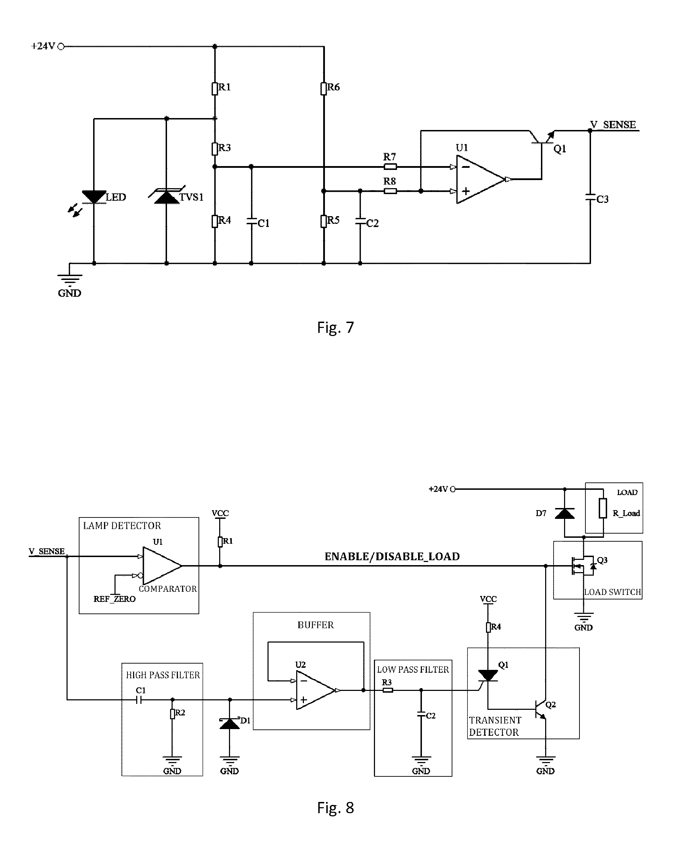

The current sense block continuously measures the current drawn by the lamp and outputs a signal, in some embodiments a voltage, proportional to it (hereinafter designated Vₛₑₙₛₑ) - see fig. 7, of which a particular embodiment is described below.

Vₛₑₙₛₑ is obtained amplifying the voltage difference between two branches. One formed by R₁, where the actual current drawn by the lamp flows and, R₃ and R₄. This branch is connected to the inverting input of the amplifier. The other branch is formed by R₅ and R₆, and it is connected to the non- inverting input of the amplifier. Resistors R₄ and R₅ have to be much higher than R₃ and R₆ and these several times bigger than R₁.

Optionally, capacitors C₁, C₂ and C₃ serve to improve the electromagnetic immunity of the circuit. TVS₁ is optionally included to supply transient overvoltage protection.

The current sense signal, in particular the V_{Sense} Voltage, will then be applied to the load simulation control module.

The load simulation control module is the module that takes decisions about the existence of the lamps and the type of lamps attached. Schematic of an embodiment of this module is shown in fig. 8.

Existence or not of a lamp is determined by the circuit "Lamp detector". It consists of a comparator that compares the current sense signal in particular V_{Sense} (obtained in current sense module) with a reference signal, in particular a voltage, V_{REF_ZERO} related with the current threshold value Iₘᵢₙ. If V_{Sense} exceeds V_{REF_ZERO}, then a lamp is attached to the device and the output of comparator U₁ will be in the high level state. Otherwise the output of comparator U₁ will be in the low level and Load switch Q₃ won't be switched ON.

The distinction between filament lamp and LED lamp is carried out by the conjunction of four stages "High pass filter", "Buffer", "Low pass filter" and "Transient detector" of a preferred embodiment, but the working scheme is applicable to the overall disclosure.

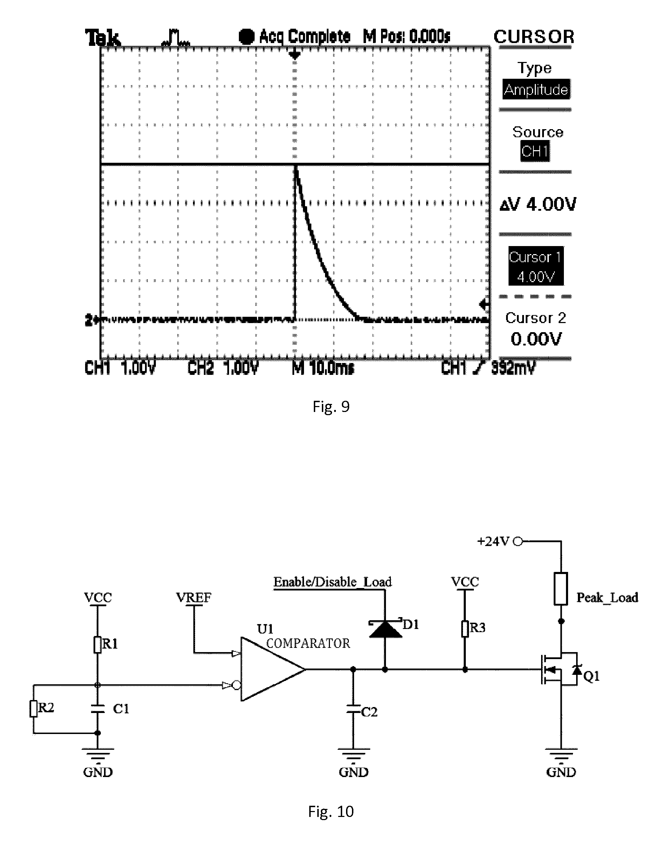

Initially V_{Sense} is high pass filtered to remove the steady-state phase (DC component), meaning that the derivative of the signal is obtained. For this circuit, only the transient is relevant because comparing the form of the current profile of both lamps (filament and LED), what distinguishes each other is the transient. Figure 9 shows for an incandescent filament lamp that after the high pass filter only the transient phase of the current profile remains. A high pass is a very simple and cost-effective differentiator but other differentiator circuits may be used as known in the art.

The "Low pass filter" stage is intended to remove any noise and eliminate the very fast transient caused by the rise edge of the square wave generated by LED lamps.

The purpose of the "Buffer" stage is to isolate these two filter stages.

The "Transient detector" stage performs what its name suggests, i.e. if a transient high enough rises in its input due to the start of a filament lamp and not the very fast transient of a LED. In this embodiment and in this case, transistor Q₂ is switched ON and Q₃ will always be OFF.

Thyristor Q₁ will work as a memory, after a transient detection it will be always ON, only changing state when the lamp is turned OFF. When a LED lamp is connected to the circuit no transient will appear in the input of the "transient detector" and Q₂ will be always OFF, meaning that the transient detector output will be in the high level.

"Transient detector" works together with "Lamp detector" by means of a logic AND, meaning that Q₃ will only be in the ON state when the output of both circuits is in the high level. When Q₃ is switched ON it will connect R_Load in parallel with the LED lamp, causing an extra consumption of current. This extra current will be seen upstream as simulation of the current consumption a filament lamp.

The joining of two current sense circuits, e.g. for operation of two Stop lights as described above, can be carried out by joining the "enable/disable load" lines of two current sense modules connected at the Q₃ gate and sharing the load switch (including Q₃) and load modules.

The peak generator module task is to generate a current pulse peak, that emulates the transient generated when a 21W bulb is switched on. The operation of an embodiment of this module is described as follows.

When V_{CC} becames available (with a short delay after the supply, e.g. +24V, is applied), capacitor C₁ starts charging until the voltage V_{C} rises above V_{ref} (e.g. 2.495V). When the voltage V_{C} is below V_{ref}, the comparator ouput is in the high level (12V) and Q₁ is ON. Switching on Q1 will connect Peak_Load resistor in parallel with the lamp. When the voltage V_{C} goes above V_{ref}, the comparator output goes to the low level (0,7V max) and Q₁ is OFF. This module is also controlled by the Load Simulation Control module through D₁ diode, when Enable/Disable_Load signal is in low level this module is disabled and Q₁ is always OFF. When Enable/Disable_Load signal is in high level this module will have its normal operation as described previuously.

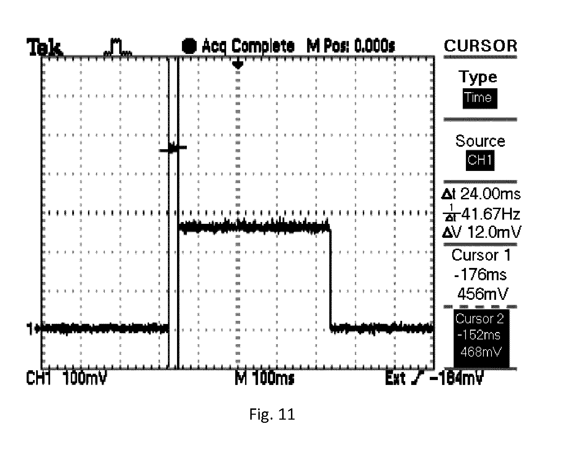

Figure 11 shows the resultant current profile when a LED lamp is attached to the device and this simulates a filament lamp. It can be seen that the duration of the generated peak is 24ms.

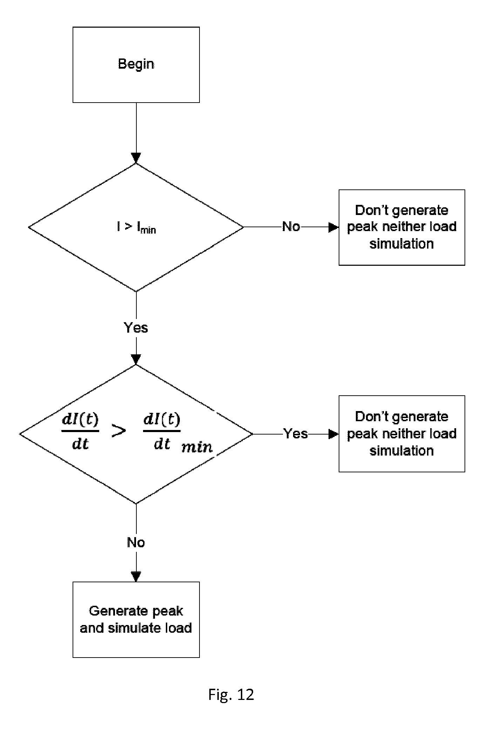

Figure 12 shows a schematic representation of the workflow of an embodiment, which also applies to the overall disclosure. A first comparison of the current drawn by the lamp is made with a minimum current threshold. A second comparison of the increase rate of the current drawn by the lamp is made with a current increase rate threshold. If both comparisons are positive then the filament lamp simulation load is activated.

The above described embodiments are combinable.

### Brief Description of the Drawings

The following figures provide preferred embodiments for illustrating the description and should not be seen as limiting the scope of invention.
**Figure 1****:** Schematic representation of an embodiment's block diagram for an individual lamp.
**Figure 2****:** Schematic representation of a filament lamp current profile.
**Figure 3****:** Schematic representation of a LED lamp current profile.
**Figure 4****:** Schematic representation of ECU check of filament lamp scan, wherein (1) represents a check of the initial current pulse peak, (2) represents a check of the intermediate current of the initial current pulse peak, (3) represents a check of the steady-state current consumption and (4) represents a check of the total energy consumed by the lamp, wherein (A) represents the current/time area.
**Figure 5****:** Schematic representation of current profile obtained by the parallel of lamp, load simulation resistor and peak pulse generating resistor.
**Figure 6****:** Schematic representation of an embodiment's block diagram for two stop lamps.
**Figure 7****:** Schematic representation of an embodiment of the current sense module.
**Figure 8****:** Schematic representation of an embodiment of the load simulation control module.
**Figure 9****:** Schematic representation of signal V_{Sense} after the high pass filter, with a 21W bulb attached.
**Figure 10****:** Schematic representation of an embodiment of the peak generator module.
**Figure 11****:** Schematic representation of the current profile simulated when a LED lamp is attached with duration of the generated peak being 24ms.
**Figure 12****:** Schematic representation of the workflow of an embodiment.

In the present disclosure, RC-circuit means a resistor-capacitor circuit, MOSFET means metal-oxide-semiconductor field-effect transistor, LED means light-emitting diode, DC means direct current.

## Claims

1. Control circuit device for a light source of a vehicle, wherein the light source comprises a lamp, and said lamp being either a LED lamp or filament lamp, comprising:
a. a current sense detector of the current drawn by the lamp;
b. an incandescent filament simulation load, comprising a steady-state simulation load and a pulse-peak simulation load.
c. a switch, connected with the simulation load, for connecting the simulation load in parallel with the lamp;
d. a first comparator, connected to the current sense detector, of a minimum current of the current drawn by the lamp with a first predetermined threshold value of the minimum current;
e. a second comparator, connected to the current sense detector, of a peak current increase rate of the current drawn by the lamp with a second predetermined threshold value of the peak current increase rate;
f. a control module configured to close the switch to connect the simulation load in parallel with the lamp, when the first comparator determines that the current drawn by the lamp is above the first predetermined threshold value and the second comparator determines that the increase rate of the current drawn by the lamp is below the second predetermined threshold value.

2. Control circuit device for a light source of a vehicle according to the previous claim, wherein the control circuit device is configured to maintain the switch closed, when the switch has been closed, until when power is removed from the control circuit device.

3. Control circuit device for a light source of a vehicle according to the previous claim, wherein the control circuit device comprises a thyristor configured to maintain the switch closed, when the switch has been closed, until when power is removed from the control circuit device.

4. Control circuit device for a light source of a vehicle according to claim 1, wherein the control circuit device is configured to maintain the switch closed, when the switch has been closed, until when the first comparator determines that the current drawn by the lamp is below the first predetermined threshold value.

5. Control circuit device for a light source of a vehicle according to any of the previous claims, wherein the second comparator of the peak current increase rate threshold comprises a differentiator of the current drawn by the lamp for obtaining the increase rate of the peak current drawn by the lamp.

6. Control circuit device for a light source of a vehicle according to the previous claim, wherein the differentiator is a high-pass RC filter.

7. Control circuit device for a light source of a vehicle according to the previous claim, wherein the second comparator of the peak current increase rate threshold comprises a low pass filter of the differentiated current drawn by the lamp.

8. Control circuit device for a light source of a vehicle according to the previous claim, wherein the low pass filter is a RC filter.

9. Control circuit device for a light source of a vehicle according to any of the previous claims, wherein the simulation load comprises a resistive load.

10. Control circuit device for a light source of a vehicle according to the previous claim, wherein the steady-state simulation load and/or the pulse-peak simulation load is a resistive load.

11. Control circuit device for a light source of a vehicle according to any of the previous claims, wherein the pulse-peak simulation load is configured to be enabled for an equivalent time of the peak current time of a filament lamp, in particular such that an Electronic Control Units, ECU,

12. Control circuit device for a light source of a vehicle according to any of the previous claims, wherein the switch comprises a power MOSFET.

13. Control circuit device for a light source of a vehicle according to the previous claim, wherein the pulse-peak simulation load comprises an RC-circuit timer for setting the duration of the pulse-peak simulation.

14. Method of controlling a light source of a vehicle, wherein the light source comprises a lamp, and said lamp being either a LED lamp or filament lamp, comprising:
detecting the current drawn by the lamp;
switching an incandescent filament simulation load in parallel with the lamp, when:
the current drawn by the lamp is above a first predetermined minimum current threshold; and
when the increase rate of the current drawn by the lamp is below a second predetermined peak current increase rate threshold.

15. Method of controlling two light sources of a vehicle, wherein each light source comprises a lamp, and each said lamp being either a LED lamp or filament lamp, comprising:
detecting the current drawn by each lamp;
switching an incandescent filament simulation load in parallel with the lamp, when:
the current drawn by both lamps is above a first predetermined minimum current threshold; and
when the increase rate of the current drawn by both lamps is below a second predetermined peak current increase rate threshold.
